(19) Europäisches Patentamt
European Patent Office
Office européen des brevets

(11) **EP 4 364 377 B1**

(12) **EUROPEAN PATENT SPECIFICATION**

(45) Date of publication and mention
of the grant of the patent:
**26.02.2025 Bulletin 2025/09**

(21) Application number: **21814892.2**

(22) Date of filing: **15.11.2021**

(51) International Patent Classification (IPC):
*H04L 43/0864* (2022.01)     *H04L 43/091* (2022.01)

(52) Cooperative Patent Classification (CPC):
**H04L 43/0864; H04L 43/091**

(86) International application number:
**PCT/IB2021/060576**

(87) International publication number:
**WO 2023/275608 (05.01.2023 Gazette 2023/01)**

(54) **BOOST ENHANCED ACTIVE MEASUREMENT**

BOOST-ERWEITERTE AKTIVE MESSUNG

MESURE ACTIVE AMÉLIORÉE PAR AMPLIFICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2021 US 202163216908 P**

(43) Date of publication of application:
**08.05.2024 Bulletin 2024/19**

(73) Proprietor: **Telefonaktiebolaget LM Ericsson
(publ)
164 83 Stockholm (SE)**

(72) Inventor: **SCHUBERT, David
Kanata, K2K 1A9 (CA)**

(74) Representative: **Ericsson
Patent Development
Torshamnsgatan 21-23
164 80 Stockholm (SE)**

(56) References cited:
**GB-A- 2 580 595      US-A1- 2012 269 082
US-A1- 2016 105 341      US-A1- 2021 194 782**

## Description

TECHNICAL FIELD

Disclosed are embodiments related to measurement of a network, and in particular, evaluation of a quality of service boost.

BACKGROUND

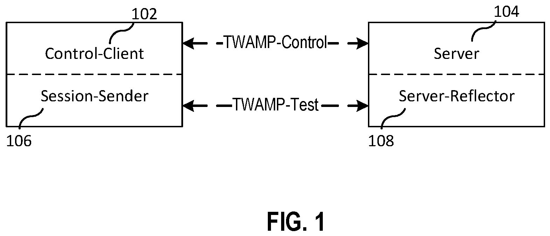

The Two-Way Active Measurement Protocol (TWAMP) defines two-way or roundtrip measurement capabilities. The TWAMP measurement architecture is usually comprised of two hosts with specific roles: a control client and a server. A common distribution of functions between the two hosts is illustrated in FIG. 1, which illustrates a logical distribution of functionalities between TWAMP hosts, such as control client 102 and a server 104. In certain aspects, the control-client 102 requests, and in some instances describes, a test session with a unique TWAMP-Control message. The server 104 responds with its acceptance and supporting information. More than one test session may be requested with additional messages. Typically, the control-client initiates all requested testing with a start-sessions message, and the server 104 acknowledges. The session-sender 106 and the session-reflector 108 can exchange test packets according to the TWAMP-Test protocol for each active session.

US 2016/0105341 discloses a method for measuring asymmetry in propagation delay of first and second links which connect a first node to a second node of a communications network. GB 2580595 discloses user performance adaptation to ensure fairness when relative performance between users exceeds a threshold disparity.

SUMMARY

There currently exist certain challenges. For instance, current quality of service (QoS) measurements and decisions are largely made within the telecommunications infrastructure, which can leave the end-user out of the process.

Accordingly, in some embodiments, a method is provided that is performed by a user equipment (UE) for active network measurement. The method comprises sending one or more first test packets to a node, wherein the first test packets are not boosted; receiving one or more first reflected packets from the node; calculating preliminary results based at least in part on the received first reflected packets; sending one or more second test packets to the node, wherein the second test packets are boosted; receiving one or more second reflected packets from the node; and calculating test results based at least in part on the received second reflected packets and the preliminary results. In some embodiments, the method further comprises performing a QoS determination, a QoS request, or QoS reporting operation based at least in part on the test results. In some embodiments, the preliminary results comprise one or more time or delay values. The one or more time or delay values may be calculated based at least in part on timestamps of the received first reflected packets. The UE may be, for example, an end-user device connected to one or more of a cellular or wide area network, WAN, data path. In embodiments, the node may comprise a test head module.

According to embodiments, a method performed by a node is provided. The method may comprise receiving and reflecting one or more first test packets from an end-user device, wherein the first test packets are not boosted; receiving and reflecting one or more second test packets from an end-user device, wherein the second test packets are boosted; and receiving a message from the end-user device indicating one or more of a QoS test result, QoS determination, QoS request, or a boost request based at least in part on the first and second test packets. In some embodiments, the node comprises a test head.

According to embodiments, an apparatus, such as a UE, network node (e.g., comprising a test head), or host, is provided that is configured to perform one or more of the methods. For example, an apparatus may comprise a receiver/transmitter and a processor, wherein the processor is configured to perform one or more of the methods. In some embodiments, the apparatus may comprise various combinations of hardware and/or software, such as a server (e.g., a cloud-implemented or distributed server) or a virtual machine, container, or other processing resources configured to provide one or more services to one or more UEs.

According to embodiments, a computer program is provided that comprises instructions that when executed by processing circuitry of an apparatus causes the apparatus to perform one or more of the methods. The program can be contained on a carrier, where the carrier is one of an electronic signal, an optical signal, a radio signal, and a computer readable storage medium.

BRIEF DESCRIPTION OF THE DRAWINGS

The accompanying drawings, which are incorporated herein and form part of the specification, illustrate various embodiments.

FIG. 1 illustrates an example an active measurement protocol.

FIGs. 2, 3, 4, and 5 illustrate systems according to embodiments.

FIG. 6 is a signal flow diagram according to embodiments.

FIGs. 7A and 7B are flow charts illustrating processes according to embodiments.

FIG. 8 illustrates a system according to embodiments.

FIG. 9 illustrates a device according to embodiments.

FIG. 10 illustrates a network node according to embodiments.

FIG. 11 is a schematic diagram of a host according to embodiments.

FIG. 12 is a schematic diagram of a virtualization environment according to embodiments.

FIG. 13 is a communication diagram according to embodiments.

DETAILED DESCRIPTION

Certain aspects of the disclosure and the described embodiments may provide solutions to one or more challenges, such as inclusion of the end user in QoS measurement and decision making, as well as improved use of active measurements. For instance, aspects of the disclosure and their embodiments may be built on top of existing active measurement technology, leveraging active measurements to output a recommendation and/or action to the end-user device. In particular, aspects of the disclosure and their embodiments can provide a mechanism to take active measurements over the 4G/5G air interface in order to determine in real time if one or multiple designated traffic flows can benefit from a QoS upgrade. While the air interface is used as an example, embodiments may be applied in other networks, including a wireless access network (WAN) or other data path(s).

According to embodiments, a real time evaluation engine is provided that allows an end user to control and explicitly request a QoS boost when it is needed or available. In order to enable such capability, the engine processes measurements and outputs an estimation on whether a boost of a particular traffic flow can help improve the user's quality of experience. The measurements may be, for example, obtained from running TWAMP. In certain aspects, such evaluation can occur periodically, for instance, at a rate that can be pre-configured at the backend. In some situations, the boost cannot improve the overall performance because of additional parameters that are not affected when a boost is implemented. However, when a boost is considered useful, a signaling messages flow can take place between the end user device requesting the boost and a network exposure function (NEF). On the user's device, the signaling messages may be generated by a specialized agent. For example, when implemented on The One Network (TON), it may be referred to as a TON agent.

In some embodiments, a configurable number of active measurement packets (e.g., TWAMP packets) are sent first in an un-boosted state, and then, the same number of packets are sent in a boosted state. If a difference is detected it can be attributed to congestion in the cellular network default bearer (or other measured path). This can indicate that a boost of application traffic from the device would be effective in decreasing packet latency. Aspects of the disclosure leverage QoS management capabilities exposed by a 3GPP interface (e.g., T8), where packets are sent from a client mobile device to a reflector service running in the public cloud. In this respect, certain aspects of measurement protocol run "over the top" where the network is not necessarily aware of the test taking place.

Certain embodiments may provide technical advantages, including real-time (e.g., continuous) evaluation of whether a boost or other service upgrade is beneficial over one or more radio interfaces. Additional advantages may include that the clocks on the client and reflector (e.g., a UE and test head) do not need to be synchronized. In certain aspects, a boost adds a new dimension for detecting congestion in the cellular domain. This may comprise, for example, comparing default congestion or time values (e.g., with standard QoS class identifiers or 4G/5G QoS identifiers (QCI/5QI)) with non-default values (e.g., with improved Guaranteed Bit Rate (GBR) or non-Guaranteed Bit Rate (non-GBR) values based on improved priority).

Some of the embodiments contemplated herein will now be described more fully with reference to the accompanying drawings. Embodiments are provided by way of example to convey the scope of the subject matter to those skilled in the art.

According to embodiments, a mechanism is provided with respect to two endpoints. One end point may be, for instance, an end-user device (e.g., iOS, Android, or other device) connected to a network (e.g., a 4G/5G network). The device may be running an agent, such as a software developer kit (SDK), or other dedicated agent, with a TWAMP control-client and comprising a session-sender. The second end point may be, for instance, a test head module (e.g., implemented in software). For example, it may be a TON test head. This may be running in the cloud alongside specific types of apps servers, such as gaming apps, where the test head runs or otherwise comprises a TWAMP server and/or a session-reflector.

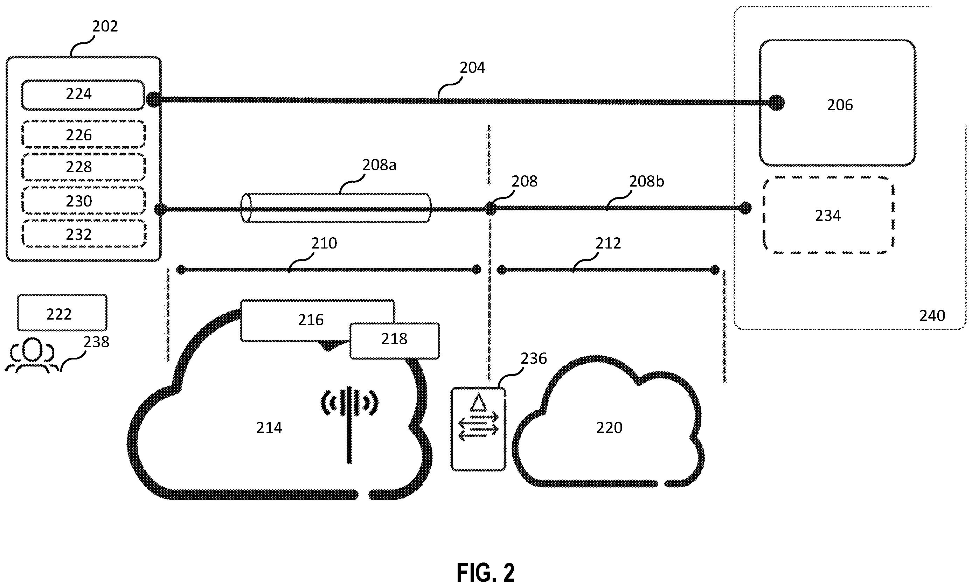

An overview of an architecture that may be used according to embodiments is provided in FIG. 2. In this example, an active measurement 204 is performed between a user device 202 and a test head 206. The active measurement 204 may be, according to embodiments, a boost enhanced active measurement (BEAM). The user device 202 may be, for example, a UE running an iOS or Android platform. In certain aspects, the device may have one or more of a software development kit (SDK) 224, a Domain Name System (DNS) module 226, and/or modules for one or more TCP/IP protocols 228. Additionally, aspects of user device 202 may be implemented in firmware 230, hardware 232, or both. The test head 206 may be in cloud 240, and in some embodiments, is running alongside one or more applications 234. In some embodiments, application 234 is accessed by a user of user device 202 (e.g., the user is connecting to application 234 or using one or more of its services). The user device 202 may be used by a portal user 238 accessing a portal 222.

According to embodiments, a user may be accessing an application 234, or other node or service, via a data path 208. In this example, the portion 208a is boostable while portion 208b is not boostable. In certain aspects, a QoS on data path 208a can be improved by request from the user device while the QoS on data path 208b cannot be improved in such a manner. Additionally, in this example, the 208a data path is in the cellular domain 210 and the 208b data path is in the WAN domain 212. Other domains may be used. In some embodiments, the cellular domain may include a 4G/5G network 214 (e.g., with a network exposure application programming interface (API) 216 and one or more boost services 218), and the WAN domain is an Internet WAN 220. A User Plane Function (UPF) gateway 236 may be used.

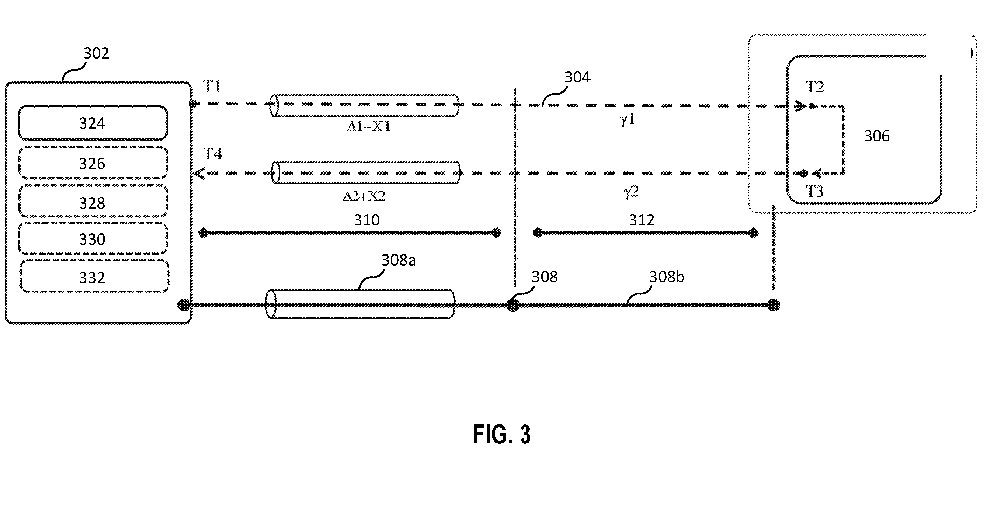

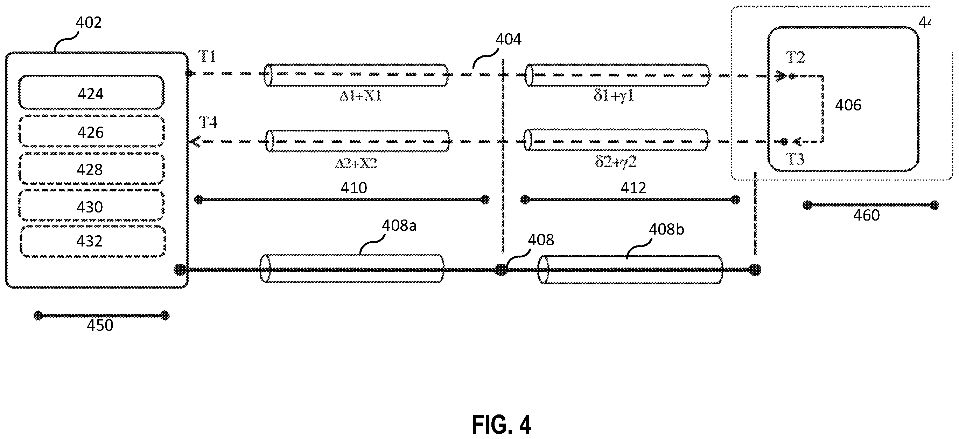

FIGs. 3 and 4 illustrate processes and signaling that can be used to trigger a boost request or evaluate the potential benefit of a boost according to embodiments. The examples illustrated and described with respect to FIGs. 3 and 4 may be implemented, for instance, using the architecture of FIG. 2.

According to embodiments, FIGs. 3 and 4 show systems and methods for leveraging a QoS boost and active measurement techniques to sectionalize one-way latency (e.g., in end-to-end or exchange-to-exchange (E2E) networks), for instance, in real-time. In some embodiments, the boost may be a TON Boost and the active measurement may use TWAMP techniques. In the examples of FIGs. 3 and 4, the values T1, T2, T3, and T4 may be timestamps collected in test packets. Such packets are initiated by the user device, such as an SDK 224, 324, 424 and "reflected" by a test head (e.g., in the cloud) or vice versa. The number, size, and DNN for test packets to be used can be specified by the user of the user device (e.g., portal user 238) making a test request. According to embodiments, the timestamps in the packets (T1,T2,T3,T4) are recorded by the user device or UE (T1,T4) and a reflector or test head (T2,T3) located in the public cloud. By comparing the timestamps in the unboosted packet set against the boosted packets, it is possible to measure the boost effect on latency on both the uplink and downlink directions. In some embodiments, the method measures the effect of a QoS boost on packet latency in the cellular domain where QoS boost is possible using T8 QoS APIs.

With respect to the example of FIG. 3, a boost may be available on a cellular data path 308a in the cellular domain 310, but not necessarily on a WAN data path 308b in the WAN domain 312. In this example, packets may be transmitted as part of active measurement 304 of data path 308 between a user device 302 and test head 306, which may be implemented in the cloud 340. In certain aspects, the user device 302 may have one or more of a software development kit (SDK) 324, a DNS module 326, and/or modules for one or more TCP/IP protocols 328. Additionally, aspects of user device (e.g., UE) 302 may be implemented in firmware 330, hardware 332, or both.

With further respect to FIG. 3, the relative time values that are measured 304 on the data path 308 include the following when a boost is not used:

$$T2-T1 = \Delta 1 + X1 + \gamma 1;$$

and

$$T4-T3 = \Delta 2 + X2 + \gamma 2.$$

That is, a measured time from user device 302 to test head 306 may be given by $\Delta 1 + X1 + \gamma 1$, where $\Delta$ and $X$ relate to the data path 308a in the cellular domain 310 and $\gamma$ relates to the data path 308b in the WAN domain 312. The descriptor "*1*" indicates the uplink direction and "2" indicates the downlink direction. When a boost is applied, the time values are given by the following:

$$(T2-T1)^B = X1 + \gamma 1;$$

and

$$(T4-T3)^B = X2 + \gamma 2.$$

where the boost is indicated by a "B" superscript. In this respect, the values of X and $\gamma$ indicate time on the cellular and WAN paths, respectively, in each of the uplink and downlink directions and the boost effect is given by:

$$\Delta 1 = (T2-T1) - (T2-T1)^B;$$

and

$$\Delta 2 = (T4-T3) - (T4-T3)^B,$$

where $\Delta 1$ is the uplink boost effect and $\Delta 2$ is the downlink boost effect. In certain aspects, a particular segment of the network (e.g., a data path in the cellular domain) can be evaluated in both the uplink and downlink direction for congestion and to determine the potential benefit of a QoS boost in the segment.

For congestion detection and evaluation, one or more of the following may be considered. For instance, if $\Delta 1 > \Omega ((T4-T1)^B - (T3-T2)^B)$, then the cell is congested on the uplink and boost will help. If $\Delta 2 > \Omega' ((T4-T1)^B - (T3-$

*T2)* $^B$*)*, then the cell is congested on the downlink and boost will help. In these examples, $\Omega$ and $\Omega'$ are ratios that may be derived from lab testing and net modeling. An example value may be between approximately 10-40%. Additionally, specific values for $\Omega$ and $\Omega'$ may be derived at run time (e.g., by the network service).

According to embodiments, and for the calculations described herein, the clocks of the client and reflector (e.g., user device 302 and test head 306) need not be synchronized.

With respect to FIG. 4, boost is available on both the cellular path 408a of cellular domain 410 and WAN data path 408b of WAN domain 412. In this example, packets may be transmitted as part of active measurement 404 of data path 408 between a user device 402 and test head 406, which may be implemented in the cloud 440. In certain aspects, the device 402 may have one or more of an SDK 424, a DNS module 426, and/or modules for one or more TCP/IP protocols 428. Additionally, aspects of user device (e.g., UE) 402 may be implemented in firmware 430, hardware 432, or both. In certain aspects, the user device 402 may be in the Wi-Fi domain 450, and the test head 406 and cloud 440 may be in the Data Center (DC) domain 460.

With further respect to FIG. 4, the relative time values that are measured 404 on the data path 408 include the following when a boost is not used:

$$T2-T1 = \Delta 1 + X1 + \delta 1 + \gamma 1;$$

and

$$T4-T3 = \Delta 2 + X2 + \delta 2 + \gamma 2.$$

Here, $\Delta + X$ relate to the data path 408a in the cellular domain 410, and $\delta$ and $\gamma$ relate to the data path 408b in the WAN domain 412, which can be boosted in this example. When a boost is applied, the time values are given by the following for the cellular boost:

$$(T2-T1)^B = X1 + \delta 1 + \gamma 1;$$

and

$$(T4-T3)^B = X2 + \delta 2 + \gamma 2.$$

The WAN boost is given by the following:

$$(T2-T1)^{B'} = \Delta 1 + X1 + \gamma 1;$$

and

$$(T4-T3)^{B'} = \Delta 2 + X2 + \gamma 2.$$

As such, the boost effect(s) of the different segments may be given as follows:

$$\Delta 1 = (T2-T1) - (T2-T1)^B;$$

$$\Delta 2 = (T4-T3) - (T4-T3)^B;$$

$$\delta 1 = (T2-T1) - (T2-T1)^{B'};$$

and

$$\delta 2 = (T4-T3) - (T4-T3)^{B'},$$

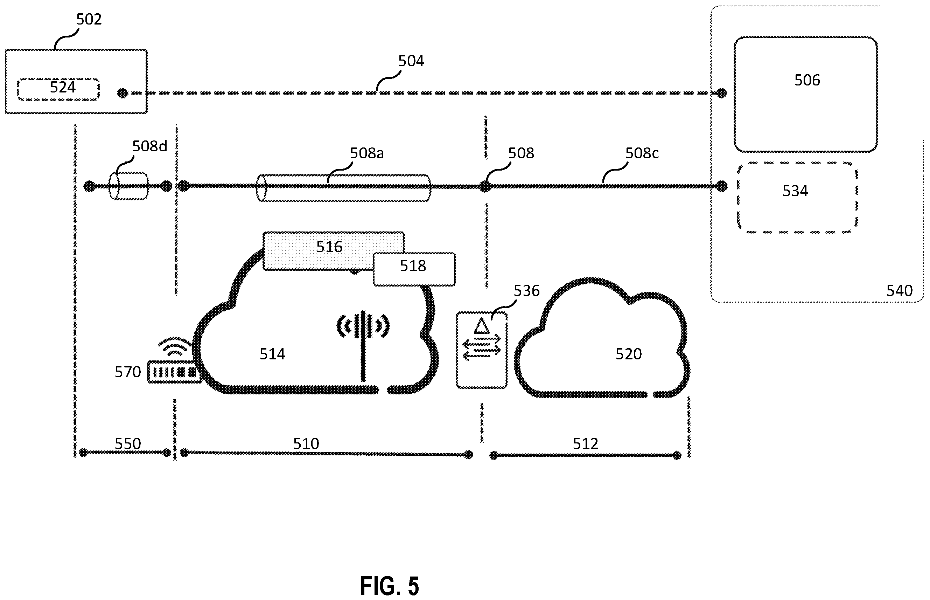

where $\Delta 1$ is the cell uplink boost effect, $\Delta 2$ is the cell downlink boost effect, $\delta 1$ is the WAN uplink boost effect, and $\delta 2$ is the WAN downlink boost effect. With this segmented congestion detection approach, different segments of the network can be independently evaluated, such as the cellular and WAN segments. Additionally, and in embodiments, the segments can be evaluated in both the uplink in downlink direction. While $\delta$ indicates the boost effect measurement on a WAN in this example, the measurement techniques described herein can be extended to any boostable network domain using the same principles. Examples include WiFi indoor, wireline WAN, etc. This may be further described with respect to FIG. 5.

For congestion detection and evaluation, the following may be considered. For instance, if $\Delta 1 > \Omega$ $((T4-T1)^B - (T3-T2)^B)$, then the cell is congested on the uplink and cell boost will help. If $\Delta 2 > \Omega'$ $((T4-T1)^B - (T3-T2)^B)$, then the cell is congested on the downlink and cell boost will help. If $\delta 1 > \omega$ $((T4-T1)^{B'} - (T3-T2)^{B'})$, then the WAN is congested on the uplink and WAN boost will help. If $\delta 2 > \omega'$ $((T4-T1)^{B'} - (T3-T2)^{B'})$, then the WAN is congested on the downlink and WAN boost will help. In these examples, $\Omega, \Omega', \omega,$ and $\omega'$ are ratios that may be derived from lab testing and net modeling. An example value may be between approximately 10-40%. Additionally, specific values for $\Omega, \Omega', \omega,$ and $\omega'$ may be derived at run time (e.g., by the network service).

FIG. 5 illustrates an extension of the devices and measurement techniques described herein to a device 502 behind customer premise equipment (CPE) 570 and using WiFi access in the WiFi domain 550. That is, the device 502 may be in a WiFi domain 550. In such a scenario, the CPE 570 is connected to another network 514, such as a 4G/5G network (mobile broadband, with network exposure 516 and a boost aspect 518) in the cellular domain 510. In this example, the cellular domain interfaces with an Internet WAN 520 in the WAN domain 512 via a UPF gateway 536. In this embodiment, a boost can be requested for both the air interface as well as the WiFi link and/or WAN portion. As shown in FIG. 5, real-time network sectionalization can be achieved from any connected device according to embodiments. The data path 508 contains a WiFi portion 508d, a cellular portion 508a, and a WAN portion 508c, which each may be evaluated by measurement 504. As with other embodiments, the device 502 may include an SDK 524, and the test head 506 may be implemented in the cloud 540 along with one or more end user applications 534. According to embodiments, the same equations and values illustrated with respect to the cellular and WAN domains in FIGs. 3 and 4 may be applied with respect to the WiFi domain 550 in the example of FIG. 5.

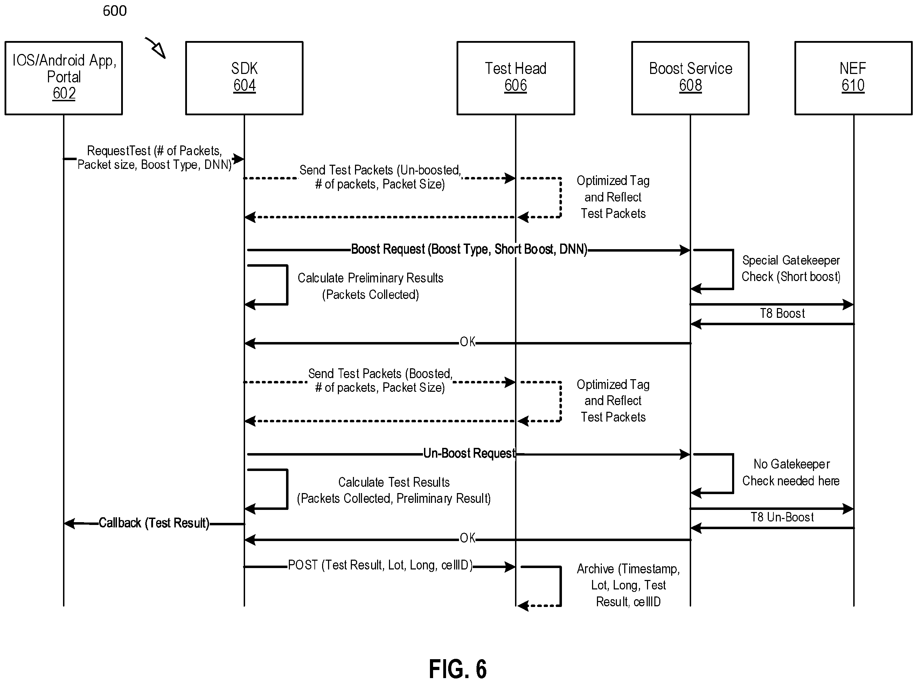

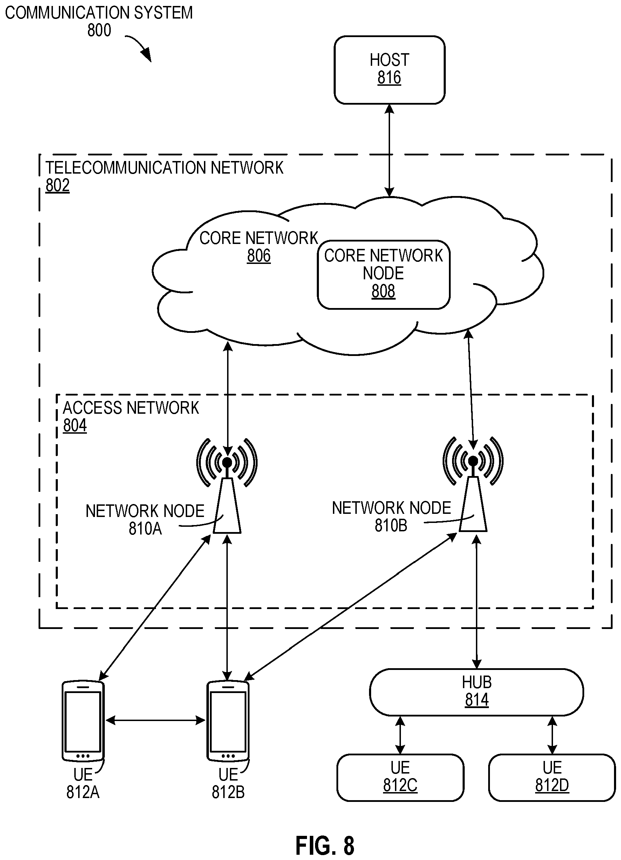

Referring now to FIG. 6, a flow diagram of a process 600 is provided according to embodiments. In certain aspects, the process 600 combines call flows from active measurements (dashed lines), and boost signaling messages (solid lines) between an SDK or other agent or app on an end-user device and the NEF, including any intermediate test heads and/or services. According to embodiments, one or more aspects may be performed by a software agent running on an end-user device and/or a backend running in the cloud. In some embodiments, aspects may be performed by one or more of the devices illustrated with respect to FIGs. 8-12.

According to embodiments, the process 600 may begin with an end-user device (e.g., with an iOS/Android application or network portal 602) making a test request. The request may include, for instance, one or more parameters of the test, such as number of test packets, packet size, a boost type, and/or DNN). The request may be made to an SDK 604. The SDK 604 may then send test packets to a Test Head 606. In this example, these initial packets are un-boosted. In certain aspects, one or more of the portal 602, SDK 604, and Test Head 606 may be part of the The One Network (TON). While the example uses calls between a portal and SDK, active measurement may be performed by software that is part of an app running on the device, such as a UE, or as part of a stand-alone program for evaluating and/or requesting a QoS boost. In some embodiments, the functions of portal 602 and SDK 604 are performed by a single device, such as a UE, and/or single module.

According to embodiments, Test Head 606 will then optimize tags and reflect the test packets back to the SDK 604. The SDK 604 may then calculate preliminary results based on the collected packets, and send a boost request. The boost request may be sent, for instance, to a Boost Service 608. The request may contain, in some embodiments, one or more of Boost Type, Short Boost, and/or DNN. In certain aspects, the request indicates what network(s) should be boosted, and for how long. For instance, a Short Boost may be a boost request for only the length of the test. The Boost Type may indicate one or more attributes of a traffic flow for which a boost is requested. Upon receipt of the request (e.g., with a Special Gatekeeper Check), the Boost Service 608 can send a boost (e.g., a T8 Boost) to the appropriate network function (NEF) 610. After receiving a response from the NEF 610, the Boost Service 608 then sends an OK message to the SDK 604. The message may indicate, for instance, boost. According to embodiments, the messaging associated with a request for and/or acceptance of a boost is in accordance with 3GPP TS 29.213, which may govern the exposure of the boost functionality by the network, for instance, by NEF 610. In certain aspects, 3GPP TS 29.122 may specify API exposure over T8, including for QoS. For example, T8 may be the interface exposed by the NEF 610, which can indicate if a boost is accept, cancelled, or timed out. When accepted, a user device (e.g., UE 202, 302, 402, 502) can boost all packets associated with applicable traffic flows, or can boost specific packets associated with an application. According to embodiments, the boosted traffic flow may be specified by one or more attributes. For instance, the traffic flow may be indicated by five tuples: (1) Source IP Address, (2) Source Port, (3) Destination IP Address, (4) Destination Port, (5) Protocol. These parameters can be passed to a QoS API identifying the traffic flow. A new dedicated bearer may then be generated for the boosted traffic flow and the traffic flow template loaded onto the user device, which directs the packets onto that bearer. According to embodiments, this bearer will have improved QoS relative to the default bearers. For instance, it may have a lower 5QI value (*i.e.,* higher priority). For 4G networks, the value may be a QoS Class Identifier (QCI). In certain aspects, there may be an improved bit rate associated with the 5QI/QCI, including guaranteed and/or non-guaranteed bit rate. There may also be provided the ability to preempt other traffic for the improved bearer.

According to embodiments, the process 600 further comprises sending boosted test packets (e.g., from the SDK to the Test Head). The Test Head 606 will then optimize tags and reflect the test packets back to the SDK 604. The SDK may then calculate test results based on the collected packets and the previously calculated preliminary results, and send an un-boost request (e.g., to the Boost Service 608). The Boost Service may then send an un-boost (e.g., T8 Un-Boost) to the NEF 610, and an OK message is sent to the SDK 604. In some embodiments, an SDK 604 may also provide the test results to the iOS/Android application or network portal 602, for instance, in the form of a callback. The SDK 604 may similarly provide a congestion estimation, and estimation regarding the potential benefit of a boost, a boost instruction or request message, or one or more QoS metrics.

Following the message exchange, the SDK 604 or other functionality of the user device may send a message to the Test Head 606, for instance, to update status. This may be in the form of a POST message (e.g., including one or more of the Test Results, Lot, Long, cellID, etc.). The Test Head 606 can then archive one or more aspects/results of the process 600. This could include, for instance, one or more of Timestamp, Lot, Long, Test Result, cellID.

While un-boosted test signals are sent first in process 600, in some embodiments, the order may be changed such that the boosted test signals are sent first. Additionally, one or more of 602, 604, 606, 608, and/or 610 may be comprised in a single unit, module, device, and/or node. For example, both Portal 602 and SDK 604 may be co-located in embodiments (e.g., in a UE).

In certain aspects, FIG. 6 describes a full BEAM protocol call flow where a user of the user device using the SDK 604 or other application requests a BEAM test for execution given certain parameters, such as packet size, number of packets, boost type, and DNN. According to embodiments, the protocol runs the test with a batch of un-boosted packets followed by a batch of boosted packets, calculates the test result, which is returned asynchronously to the user of the user device and/or stored (e.g., in cloud services).

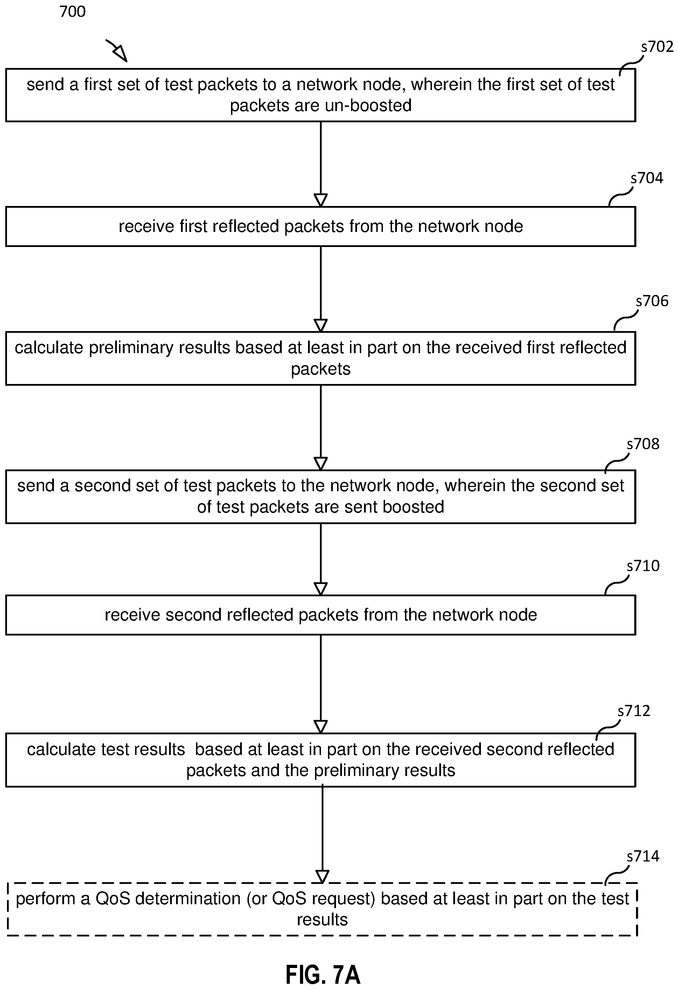

Referring now to FIG. 7A, a method 700 is provided according to embodiments. The method may be performed, for instance, by an end-user device. In some embodiments, the device comprises SDK functionality. In some embodiments, aspects may be performed by one or more of the devices or modules illustrated with respect to FIGs. 8-13.

The process may begin, for instance, with step s702, which comprises sending a first set of test packets to a network node, wherein the first set of test packets are un-boosted. In step s704, first reflected packets are received from the network node. In step s706, preliminary results are calculated based at least in part on the received first reflected packets (e.g., one or more time-/delay values, for instance, based on timestamps). In step s708, the device sends a second set of test packets to the network node. According to embodiments, the second set of test packets are sent boosted. In step s710, the device receives second reflected packets from the network node. In step s712, the device calculates test results based at least in part on the received second reflected packets and the preliminary results. In certain aspects, this may comprise deriving one or more congestion metrics. In step s714, which may be optional, a QoS determination (or QoS request) is performed based at least in part on the test results. In some embodiments, the end-user may request a QoS boost and/or output an estimation of whether a boost of a particular traffic flow could help improve the user's quality of experience or other performance metric.

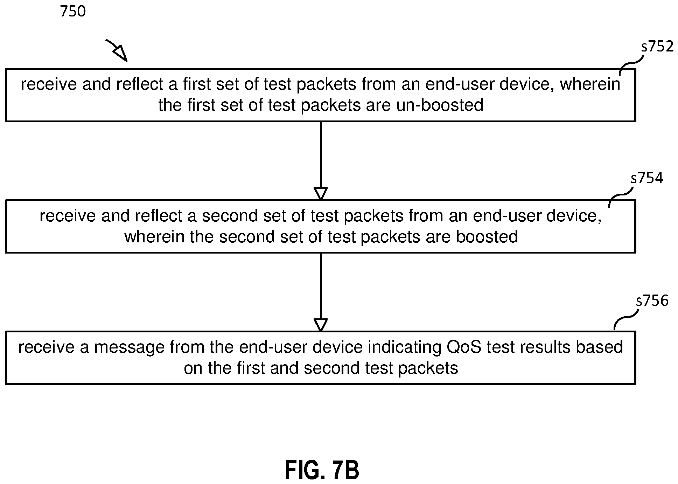

Referring now to FIG. 7B, a method 750 is provided according to embodiments. The method may be performed, for instance, by a network node or host. In some embodiments, the node comprises a test head, which may in turn be in communication with an NEF for the appropriate functions. In some embodiments, the node may comprise NEF functionality itself. In some embodiments, aspects may be performed by one or more of the devices illustrated with respect to FIGs. 8-13.

The process may begin, for instance, with step s752, which comprises receiving and reflecting a first set of test packets sent from an end-user device, wherein the first set of test packets are un-boosted. In step s754, the node receives and reflects a second set of test packets from the end-user device, wherein the second set of test packets are boosted. In step s756, the node receives a message from the end-user device indicating QoS test results or an estimation, which are based at least in part on the first and second test packets. The message may be received, for instance, as a POST message. In some embodiments, a boost request is received.

According to embodiments, one or more of the methods described with respect to FIGs. 7A and 7B may be performed as part of fine tuning network sectionalizing.

FIG. 8 shows an example of a communication system 800 in accordance with some embodiments. According to embodiments, one or more of the systems described with respect to FIGs. 2-5 can be implemented as shown in FIG. 8.

In the example of FIG. 8, the communication system 800 includes a telecommunication network 802 that includes an access network 804, such as a radio access network (RAN), and a core network 806, which includes one or more core network nodes 808. The access network 804 includes one or more access network nodes, such as network nodes 810a and 810b (one or more of which may be generally referred to as network nodes 810), or any other similar 3rd Generation Partnership Project (3GPP) access node or non-3GPP access point. The network nodes 810 facilitate direct or indirect connection of user equipment (UE), such as by connecting UEs 812a, 812b, 812c, and 812d (one or more of which may be generally referred to as UEs 812) to the core network 806 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 800 may include any number of wired or wireless networks, network nodes, UEs, and/or any other components or systems that may facilitate or participate in the communication of data and/or signals whether via wired or wireless connections. The communication system 800 may include and/or interface with any type of communication, telecommunication, data, cellular, radio network, and/or other similar type of system.

The UEs 812 may be any of a wide variety of communication devices, including wireless devices arranged, configured, and/or operable to communicate wirelessly with the network nodes 810 and other communication devices. Similarly, the network nodes 810 are arranged, capable, configured, and/or operable to communicate directly or indirectly with the UEs 812 and/or with other network nodes or equipment in the telecommunication network 802 to enable and/or provide network access, such as wireless network access, and/or to perform other functions, such as administration in the telecommunication network 802.

In the depicted example, the core network 806 connects the network nodes 810 to one or more hosts, such as host 816. These connections may be direct or indirect via one or more intermediary networks or devices. In other examples, network nodes may be directly coupled to hosts. The core network 806 includes one more core network nodes (e.g., core network node 808) that are structured with hardware and software components. Features of these components may be substantially similar to those described with respect to the UEs, network nodes, and/or hosts, such that the descriptions thereof are generally applicable to the corresponding components of the core network node 808. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 816 may be under the ownership or control of a service provider other than an operator or provider of the access network 804 and/or the telecommunication network 802, and may be operated by the service provider or on behalf of the service provider. The host 816 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 800 of Figure 8 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (Wi-Max), Bluetooth, Z-Wave, Near Field Communication (NFC) ZigBee, LiFi, and/or any low-power wide-area network (LPWAN) standards such as LoRa and Sigfox.

In some examples, the telecommunication network 802 is a cellular network that implements 3GPP standardized features. Accordingly, the telecommunications network 802 may support network slicing to provide different logical networks to different devices that are connected to the telecommunication network 802. For example, the telecommunications network 802 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs 812 are configured to transmit and/or receive information without direct human interaction. For instance, a UE may be designed to transmit information to the access network 804 on a predetermined schedule, when triggered by an internal or external event, or in response to requests from the access network 804. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, the hub 814 communicates with the access network 804 to facilitate indirect communication between one or more UEs (e.g., UE 812c and/or 812d) and network nodes (e.g., network node 810b). In some examples, the hub 814 may be a controller, router, content source and analytics, or any of the other communication devices described herein regarding UEs. For example, the hub 814 may be a broadband router enabling access to the core network 806 for the UEs. As another example, the hub 814 may be a controller that sends commands or instructions to one or more actuators in the UEs. Commands or instructions may be received from the UEs, network nodes 810, or by executable code, script, process, or other instructions in the hub 814. As another example, the hub 814 may be a data collector that acts as temporary storage for UE data and, in some embodiments, may perform analysis or other processing of the data. As another example, the hub 814 may be a content source. For example, for a UE that is a VR headset, display, loudspeaker or other media delivery device, the hub 814 may retrieve VR assets, video, audio, or other media or data related to sensory information via a network node, which the hub 814 then provides to the UE either directly, after performing local processing, and/or after adding additional local content. In still another example, the hub 814 acts as a proxy server or orchestrator for the UEs, in particular in if one or more of the UEs are low energy IoT devices.

The hub 814 may have a constant/persistent or intermittent connection to the network node 810b. The hub 814 may also allow for a different communication scheme and/or schedule between the hub 814 and UEs (e.g., UE 812c and/or 812d), and between the hub 814 and the core network 806. In other examples, the hub 814 is connected to the core network 806 and/or one or more UEs via a wired connection. Moreover, the hub 814 may be configured to connect to an M2M service provider over the access network 804 and/or to another UE over a direct connection. In some scenarios, UEs may establish a wireless connection with the network nodes 810 while still connected via the hub 814 via a wired or wireless connection. In some embodiments, the hub 814 may be a dedicated hub - that is, a hub whose primary function is to route communications to/from the UEs from/to the network node 810b. In other embodiments, the hub 814 may be a nondedicated hub - that is, a device which is capable of operating to route communications between the UEs and network node 810b, but which is additionally capable of operating as a communication start and/or end point for certain data channels.

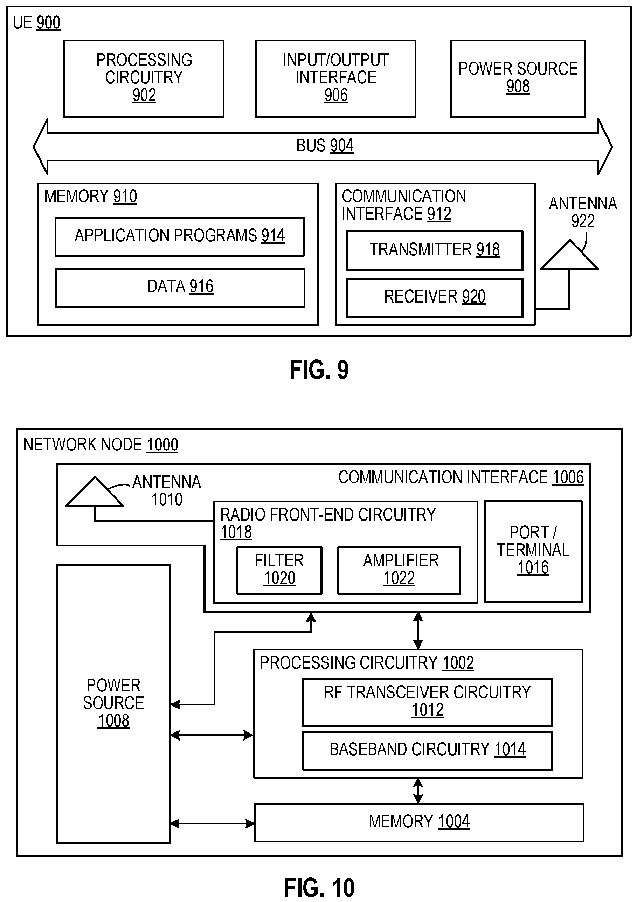

FIG. 9 shows a UE 900 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 900 includes processing circuitry 902 that is operatively coupled via a bus 904 to an input/output interface 906, a power source 908, a memory 910, a communication interface 912, and/or any other component, or any combination thereof. Certain UEs may utilize all or a subset of the components shown in Figure 9. The level of integration between the components may vary from one UE to another UE. Further, certain UEs may contain multiple instances of a component, such as multiple processors, memories, transceivers, transmitters, receivers, etc.

The processing circuitry 902 is configured to process instructions and data and may be configured to implement any sequential state machine operative to execute instructions stored as machine-readable computer programs in the memory 910. The processing circuitry 902 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 902 may include multiple central processing units (CPUs).

In the example, the input/output interface 906 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 900. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 908 is structured as a battery or battery pack. Other types of power sources, such as an external power source (e.g., an electricity outlet), photovoltaic device, or power cell, may be used. The power source 908 may further include power circuitry for delivering power from the power source 908 itself, and/or an external power source, to the various parts of the UE 900 via input circuitry or an interface such as an electrical power cable. Delivering power may be, for example, for charging of the power source 908. Power circuitry may perform any formatting, converting, or other modification to the power from the power source 908 to make the power suitable for the respective components of the UE 900 to which power is supplied.

The memory 910 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 910 includes one or more application programs 914, such as an operating system, web browser application, a widget, gadget engine, or other application, and corresponding data 916. The memory 910 may store, for use by the UE 900, any of a variety of various operating systems or combinations of operating systems.

The memory 910 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 910 may allow the UE 900 to access instructions, application programs and the like, stored on transitory or non-transitory memory media, to off-load data, or to upload data. An article of manufacture, such as one utilizing a communication system may be tangibly embodied as or in the memory 910, which may be or comprise a device-readable storage medium.

The processing circuitry 902 may be configured to communicate with an access network or other network using the communication interface 912. The communication interface 912 may comprise one or more communication subsystems and may include or be communicatively coupled to an antenna 922. The communication interface 912 may include one or more transceivers used to communicate, such as by communicating with one or more remote transceivers of another device capable of wireless communication (e.g., another UE or a network node in an access network). Each transceiver may include a transmitter 918 and/or a receiver 920 appropriate to provide network communications (e.g., optical, electrical, frequency allocations, and so forth). Moreover, the transmitter 918 and receiver 920 may be coupled to one or more antennas (e.g., antenna 922) and may share circuit components, software or firmware, or alternatively be implemented separately.

In the illustrated embodiment, communication functions of the communication interface 912 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 912, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 900 shown in FIG. 9.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

FIG. 10 shows a network node 1000 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 1000 includes a processing circuitry 1002, a memory 1004, a communication interface 1006, and a power source 1008. The network node 1000 may be composed of multiple physically separate components (e.g., a NodeB component and a RNC component, or a BTS component and a BSC component, etc.), which may each have their own respective components. In certain scenarios in which the network node 1000 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 1000 may be configured to support multiple radio access technologies (RATs). In such embodiments, some components may be duplicated (e.g., separate memory 1004 for different RATs) and some components may be reused (e.g., a same antenna 1010 may be shared by different RATs). The network node 1000 may also include multiple sets of the various illustrated components for different wireless technologies integrated into network node 1000, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 1000.

The processing circuitry 1002 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1000 components, such as the memory 1004, to provide network node 1000 functionality.

In some embodiments, the processing circuitry 1002 includes a system on a chip (SOC). In some embodiments, the processing circuitry 1002 includes one or more of radio frequency (RF) transceiver circuitry 1012 and baseband processing circuitry 1014. In some embodiments, the radio frequency (RF) transceiver circuitry 1012 and the baseband processing circuitry 1014 may be on separate chips (or sets of chips), boards, or units, such as radio units and digital units. In alternative embodiments, part or all of RF transceiver circuitry 1012 and baseband processing circuitry 1014 may be on the same chip or set of chips, boards, or units.

The memory 1004 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 1002. The memory 1004 may store any suitable instructions, data, or information, including a computer program, software, an application including one or more of logic, rules, code, tables, and/or other instructions capable of being executed by the processing circuitry 1002 and utilized by the network node 1000. The memory 1004 may be used to store any calculations made by the processing circuitry 1002 and/or any data received via the communication interface 1006. In some embodiments, the processing circuitry 1002 and memory 1004 is integrated.

The communication interface 1006 is used in wired or wireless communication of signaling and/or data between a network node, access network, and/or UE. As illustrated, the communication interface 1006 comprises port(s)/terminal(s) 1016 to send and receive data, for example to and from a network over a wired connection. The communication interface 1006 also includes radio front-end circuitry 1018 that may be coupled to, or in certain embodiments a part of, the antenna 1010. Radio front-end circuitry 1018 comprises filters 1020 and amplifiers 1022. The radio front-end circuitry 1018 may be connected to an antenna 1010 and processing circuitry 1002. The radio front-end circuitry may be configured to condition signals communicated between antenna 1010 and processing circuitry 1002. The radio front-end circuitry 1018 may receive digital data that is to be sent out to other network nodes or UEs via a wireless connection. The radio front-end circuitry 1018 may convert the digital data into a radio signal having the appropriate channel and bandwidth parameters using a combination of filters 1020 and/or amplifiers 1022. The radio signal may then be transmitted via the antenna 1010. Similarly, when receiving data, the antenna 1010 may collect radio signals which are then converted into digital data by the radio front-end circuitry 1018. The digital data may be passed to the processing circuitry 1002. In other embodiments, the communication interface may comprise different components and/or different combinations of components.

In certain alternative embodiments, the network node 1000 does not include separate radio front-end circuitry 1018, instead, the processing circuitry 1002 includes radio front-end circuitry and is connected to the antenna 1010. Similarly, in some embodiments, all or some of the RF transceiver circuitry 1012 is part of the communication interface 1006. In still other embodiments, the communication interface 1006 includes one or more ports or terminals 1016, the radio front-end circuitry 1018, and the RF transceiver circuitry 1012, as part of a radio unit (not shown), and the communication interface 1006 communicates with the baseband processing circuitry 1014, which is part of a digital unit (not shown).

The antenna 1010 may include one or more antennas, or antenna arrays, configured to send and/or receive wireless signals. The antenna 1010 may be coupled to the radio front-end circuitry 1018 and may be any type of antenna capable of transmitting and receiving data and/or signals wirelessly. In certain embodiments, the antenna 1010 is separate from the network node 1000 and connectable to the network node 1000 through an interface or port.

The antenna 1010, communication interface 1006, and/or the processing circuitry 1002 may be configured to perform any receiving operations and/or certain obtaining operations described herein as being performed by the network node. Any information, data and/or signals may be received from a UE, another network node and/or any other network equipment. Similarly, the antenna 1010, the communication interface 1006, and/or the processing circuitry 1002 may be configured to perform any transmitting operations described herein as being performed by the network node. Any information, data and/or signals may be transmitted to a UE, another network node and/or any other network equipment.

The power source 1008 provides power to the various components of network node 1000 in a form suitable for the respective components (e.g., at a voltage and current level needed for each respective component). The power source 1008 may further comprise, or be coupled to, power management circuitry to supply the components of the network node 1000 with power for performing the functionality described herein. For example, the network node 1000 may be connectable to an external power source (e.g., the power grid, an electricity outlet) via an input circuitry or interface such as an electrical cable, whereby the external power source supplies power to power circuitry of the power source 1008. As a further example, the power source 1008 may comprise a source of power in the form of a battery or battery pack which is connected to, or integrated in, power circuitry. The battery may provide backup power should the external power source fail.

Embodiments of the network node 1000 may include additional components beyond those shown in FIG. 10 for providing certain aspects of the network node's functionality, including any of the functionality described herein and/or any functionality necessary to support the subject matter described herein. For example, the network node 1000 may include user interface equipment to allow input of information into the network node 1000 and to allow output of information from the network node 1000. This may allow a user to perform diagnostic, maintenance, repair, and other administrative functions for the network node 1000.

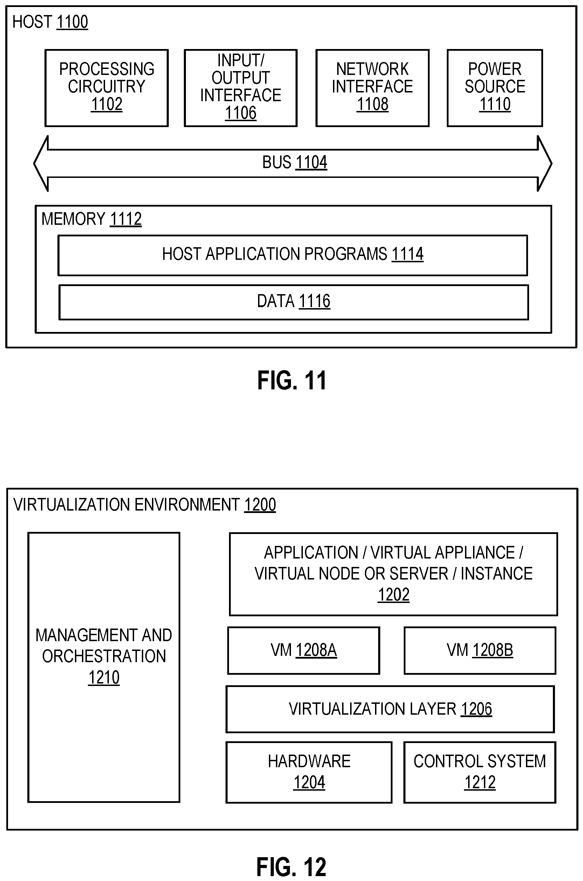

FIG. 11 is a block diagram of a host 1100, which may be an embodiment of the host 816 of Figure 8, in accordance with various aspects described herein. As used herein, the host 1100 may be or comprise various combinations hardware and/or software, including a standalone server, a blade server, a cloud-implemented server, a distributed server, a virtual machine, container, or processing resources in a server farm. The host 1100 may provide one or more services to one or more UEs.

The host 1100 includes processing circuitry 1102 that is operatively coupled via a bus 1104 to an input/output interface 1106, a network interface 1108, a power source 1110, and a memory 1112. Other components may be included in other embodiments. Features of these components may be substantially similar to those described with respect to the devices of previous figures, such as Figures 9 and 10, such that the descriptions thereof are generally applicable to the corresponding components of host 1100.

The memory 1112 may include one or more computer programs including one or more host application programs 1114 and data 1116, which may include user data, e.g., data generated by a UE for the host 1100 or data generated by the host 1100 for a UE. Embodiments of the host 1100 may utilize only a subset or all of the components shown. The host application programs 1114 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 1114 may also provide for user authentication and licensing checks and may periodically report health, routes, and content availability to a central node, such as a device in or on the edge of a core network. Accordingly, the host 1100 may select and/or indicate a different host for over-the-top services for a UE. The host application programs 1114 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

FIG. 12 is a block diagram illustrating a virtualization environment 1200 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 1200 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1202 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 1204 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1206 (also referred to as hypervisors or virtual machine monitors (VMMs)), provide VMs 1208a and 1208b (one or more of which may be generally referred to as VMs 1208), and/or perform any of the functions, features and/or benefits described in relation with some embodiments described herein. The virtualization layer 1206 may present a virtual operating platform that appears like networking hardware to the VMs 1208.

The VMs 1208 comprise virtual processing, virtual memory, virtual networking or interface and virtual storage, and may be run by a corresponding virtualization layer 1206. Different embodiments of the instance of a virtual appliance 1202 may be implemented on one or more of VMs 1208, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 1208 may be a software implementation of a physical machine that runs programs as if they were executing on a physical, non-virtualized machine. Each of the VMs 1208, and that part of hardware 1204 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 1208 on top of the hardware 1204 and corresponds to the application 1202.

Hardware 1204 may be implemented in a standalone network node with generic or specific components. Hardware 1204 may implement some functions via virtualization. Alternatively, hardware 1204 may be part of a larger cluster of hardware (e.g. such as in a data center or CPE) where many hardware nodes work together and are managed via management and orchestration 1210, which, among others, oversees lifecycle management of applications 1202. In some embodiments, hardware 1204 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 1212 which may alternatively be used for communication between hardware nodes and radio units.

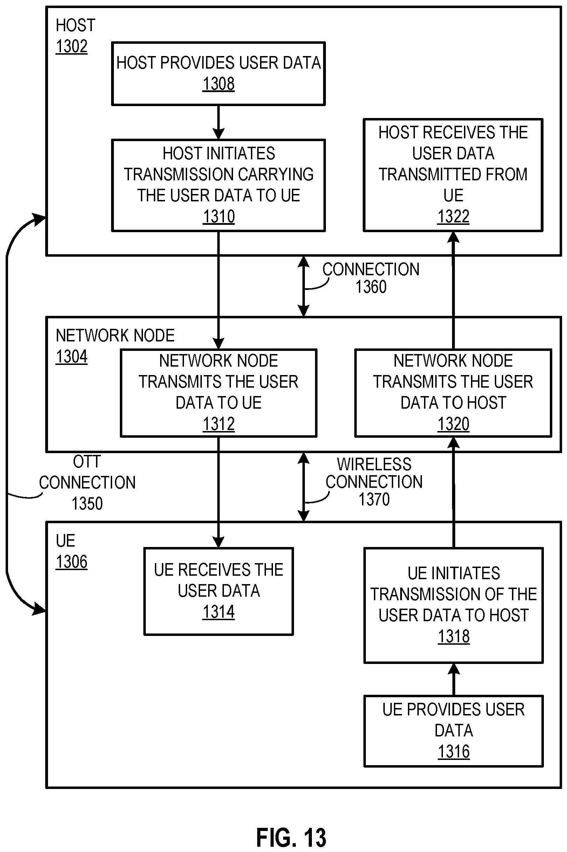

FIG. 13 shows a communication diagram of a host 1302 communicating via a network node 1304 with a UE 1306 over a partially wireless connection in accordance with some embodiments. Example implementations, in accordance with various embodiments, of the UE (such as a UE 812a of FIG. 8 and/or UE 900 of FIG. 9), network node (such as network node 810a of FIG. 8 and/or network node 1000 of FIG. 10), and host (such as host 816 of FIG. 8 and/or host 1100 of FIG. 11) discussed in the preceding paragraphs will now be described with reference to FIG. 13.

Like host 1100, embodiments of host 1302 include hardware, such as a communication interface, processing circuitry, and memory. The host 1302 also includes software, which is stored in or accessible by the host 1302 and executable by the processing circuitry. The software includes a host application that may be operable to provide a service to a remote user, such as the UE 1306 connecting via an over-the-top (OTT) connection 1350 extending between the UE 1306 and host 1302. In providing the service to the remote user, a host application may provide user data which is transmitted using the OTT connection 1350.

The network node 1304 includes hardware enabling it to communicate with the host 1302 and UE 1306. The connection 1360 may be direct or pass through a core network (like core network 806 of FIG. 8) and/or one or more other intermediate networks, such as one or more public, private, or hosted networks. For example, an intermediate network may be a backbone network or the Internet.

The UE 1306 includes hardware and software, which is stored in or accessible by UE 1306 and executable by the UE's processing circuitry. The software includes a client application, such as a web browser or operator-specific "app" that may be operable to provide a service to a human or non-human user via UE 1306 with the support of the host 1302. In the host 1302, an executing host application may communicate with the executing client application via the OTT connection 1350 terminating at the UE 1306 and host 1302. In providing the service to the user, the UE's client application may receive request data from the host's host application and provide user data in response to the request data. The OTT connection 1350 may transfer both the request data and the user data. The UE's client application may interact with the user to generate the user data that it provides to the host application through the OTT connection 1350.

The OTT connection 1350 may extend via a connection 1360 between the host 1302 and the network node 1304 and via a wireless connection 1370 between the network node 1304 and the UE 1306 to provide the connection between the host 1302 and the UE 1306. The connection 1360 and wireless connection 1370, over which the OTT connection 1350 may be provided, have been drawn abstractly to illustrate the communication between the host 1302 and the UE 1306 via the network node 1304, without explicit reference to any intermediary devices and the precise routing of messages via these devices.

As an example of transmitting data via the OTT connection 1350, in step 1308, the host 1302 provides user data, which may be performed by executing a host application. In some embodiments, the user data is associated with a particular human user interacting with the UE 1306. In other embodiments, the user data is associated with a UE 1306 that shares data with the host 1302 without explicit human interaction. In step 1310, the host 1302 initiates a transmission carrying the user data towards the UE 1306. The host 1302 may initiate the transmission responsive to a request transmitted by the UE 1306. The request may be caused by human interaction with the UE 1306 or by operation of the client application executing on the UE 1306. The transmission may pass via the network node 1304, in accordance with the teachings of the embodiments described throughout this disclosure. Accordingly, in step 1312, the network node 1304 transmits to the UE 1306 the user data that was carried in the transmission that the host 1302 initiated, in accordance with the teachings of the embodiments described throughout this disclosure. In step 1314, the UE 1306 receives the user data carried in the transmission, which may be performed by a client application executed on the UE 1306 associated with the host application executed by the host 1302.

In some examples, the UE 1306 executes a client application which provides user data to the host 1302. The user data may be provided in reaction or response to the data received from the host 1302. Accordingly, in step 1316, the UE 1306 may provide user data, which may be performed by executing the client application. In providing the user data, the client application may further consider user input received from the user via an input/output interface of the UE 1306. Regardless of the specific manner in which the user data was provided, the UE 1306 initiates, in step 1318, transmission of the user data towards the host 1302 via the network node 1304. In step 1320, in accordance with the teachings of the embodiments described throughout this disclosure, the network node 1304 receives user data from the UE 1306 and initiates transmission of the received user data towards the host 1302. In step 1322, the host 1302 receives the user data carried in the transmission initiated by the UE 1306.

One or more of the various embodiments improve the performance of OTT services provided to the UE 1306 using the OTT connection 1350, in which the wireless connection 1370 forms the last segment. More precisely, the teachings of these embodiments may improve QoS decisions and measurement techniques, and thereby provide benefits such as allowing an end user to control and explicitly request a QoS boost, improving the user's experience.

In an example scenario, factory status information may be collected and analyzed by the host 1302. As another example, the host 1302 may process audio and video data which may have been retrieved from a UE for use in creating maps. As another example, the host 1302 may collect and analyze real-time data to assist in controlling vehicle congestion (e.g., controlling traffic lights). As another example, the host 1302 may store surveillance video uploaded by a UE. As another example, the host 1302 may store or control access to media content such as video, audio, VR or AR which it can broadcast, multicast or unicast to UEs. As other examples, the host 1302 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 1350 between the host 1302 and UE 1306, in response to variations in the measurement results. The measurement procedure and/or the network functionality for reconfiguring the OTT connection may be implemented in software and hardware of the host 1302 and/or UE 1306. In some embodiments, sensors (not shown) may be deployed in or in association with other devices through which the OTT connection 1350 passes; the sensors may participate in the measurement procedure by supplying values of the monitored quantities exemplified above, or supplying values of other physical quantities from which software may compute or estimate the monitored quantities. The reconfiguring of the OTT connection 1350 may include message format, retransmission settings, preferred routing etc.; the reconfiguring need not directly alter the operation of the network node 1304. Such procedures and functionalities may be known and practiced in the art. In certain embodiments, measurements may involve proprietary UE signaling that facilitates measurements of throughput, propagation times, latency and the like, by the host 1302. The measurements may be implemented in that software causes messages to be transmitted, in particular empty or 'dummy' messages, using the OTT connection 1350 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

**Claims**

1.  A method (700) performed by a user equipment, UE, for active network measurement, the method comprising:

    sending (702) one or more first test packets to a node, wherein the first test packets are not boosted for improved Quality of Service, QoS;
    receiving (704) one or more first reflected packets from the node;
    calculating (706) preliminary results based at least in part on the received first reflected packets;
    sending (708) one or more second test packets to the node, wherein the second test packets are boosted for improved QoS;
    receiving (710) one or more second reflected packets from the node; and
    calculating (712) test results based at least in part on the received second reflected packets and the preliminary results.

2.  The method of claim 1, further comprising:

    performing (714) a quality of service, QoS, determination, a QoS request, or QoS reporting operation based at least in part on the test results; and/or
    providing an indication regarding use of QoS boost for subsequent transmissions from the UE.

3.  The method of claim 2, wherein the indication is an indication to a user that a QoS boost would improve the user's quality of experience.

4.  The method of any of claims 1-3, wherein:

    the preliminary results comprise one or more time or delay values, and the one or more time or delay values are calculated based at least in part on timestamps of the received first reflected packets; and/or
    the test results comprise one or more time, delay, effect of a QoS boost, or congestion values, and the one or more time, delay, effect of a QoS boost, or congestion values are calculated based at least in part on timestamps of the received second reflected packets.

5.  The method of any of claims 1-4, further comprising:

    obtaining a test request, wherein one or more of the first and second test packets corresponds to the test request; and
    submitting a callback.

6.  The method of any of claims 1-5, further comprising the steps of:

    sending a QoS boost request to a boost service node; and
    sending an un-boost request to the boost service node.

7.  The method of any of claims 2-6, further comprising: sending the test results or results of a quality of service, QoS, determination to the node.

8.  The method of any of claims 1-7,

    wherein the UE is an end-user device connected to one or more of a cellular or wide area network, WAN, data path, and
    wherein the node comprises a test head module.

9.  The method of any of claims 1-8, wherein one or more of the calculating steps comprises separately evaluating one or more of cellular uplink boost, cellular downlink boost, WAN uplink boost, WAN downlink boost, cellular uplink congestion, cellular downlink congestion, WAN uplink congestion, or WAN downlink congestion.

10. A user equipment, UE (900), configured to perform any one of the methods of claims 1-9.

11. A method (750) performed by a node, comprising:

    receiving and reflecting (752) one or more first test packets from an end-user device, wherein the first test packets are not boosted for improved Quality of Service, QoS;
    receiving and reflecting (754) one or more second test packets from the end-user device, wherein the second test packets are boosted for improved QoS; and
    receiving (756) a message from the end-user device indicating one or more of a QoS test result, QoS determination, a QoS request, or a boost request based at least in part on the first and second test packets.

12. The method of claim 11, further comprising:

    performing tag optimization on one or more of the first and second test packets; and/or
    archiving at least a part of the received message.

13. The method of any of claim 11 or 12, wherein:

    the node comprises a test head module running in a cloud environment and comprises a two-way active measurement, TWAMP, server and session-reflector; and/or
the clocks of the node and end-user device are not synchronized.

14. A node (1000) configured to perform any one of the methods of claims 11-13.

15. A computer program product comprising a non-transitory computer readable medium storing instructions which when performed by processing circuitry of:

a node causes the node to perform any of claims 11-13; or
a user equipment, UE, causes the UE to perform any of claims 1-9.

**Patentansprüche**

1. Verfahren (700), das von einer Benutzereinrichtung, UE, durchgeführt wird, für aktive Netzwerkmessung, wobei das Verfahren Folgendes umfasst:

Senden (702) eines oder mehrerer erster Prüfpakete an einen Knoten, wobei die ersten Prüfpakete nicht für verbesserte Dienstqualität, QoS, verstärkt werden;
Empfangen (704) eines oder mehrerer erster reflektierter Pakete von dem Knoten;
Berechnen (706) vorläufiger Ergebnisse zumindest teilweise basierend auf den empfangenen ersten reflektierten Paketen;
Senden (708) eines oder mehrerer zweiter Prüfpakete an einen Knoten, wobei die zweiten Prüfpakete für verbesserte Dienstqualität, QoS, verstärkt werden;
Empfangen (710) eines oder mehrerer zweiter reflektierter Pakete von dem Knoten;
Berechnen (712) vorläufiger Ergebnisse zumindest teilweise basierend auf den empfangenen zweiten reflektierten Paketen und den vorläufigen Ergebnissen.

2. Verfahren nach Anspruch 1, ferner umfassend:

Durchführen (714) einer Dienstqualitätsbestimmung, QoS-Bestimmung, einer QoS-Anforderung oder einer QoS-Meldeoperation zumindest teilweise basierend auf den Prüfergebnissen;
Bereitstellen einer Angabe hinsichtlich der Verwendung der QoS-Verstärkung für nachfolgende Übertragungen von der UE.

3. Verfahren nach Anspruch 2, wobei die Angabe eine Angabe für einen Benutzer ist, dass eine QoS-Verstärkung die Erlebnisqualität des Benutzers verbessern würde.

4. Verfahren nach einem der Ansprüche 1 bis 3, wobei:

die vorläufigen Ergebnisse einen oder mehrere Zeit- oder Verzögerungswerte umfassen und der eine oder die mehreren Zeit- oder Verzögerungswerte zumindest teilweise basierend auf Zeitstempeln der empfangenen ersten reflektierten Pakete berechnet werden; und/oder
die vorläufigen Ergebnisse einen oder mehrere Werte für Zeit, Verzögerung, Auswirkung einer QoS-Verstärkung oder Überlastung umfassen und der eine oder die mehreren Werte für Zeit, Verzögerung, Auswirkung einer QoS-Verstärkung oder Überlastung zumindest teilweise basierend auf Zeitstempeln der empfangenen zweiten reflektierten Pakete berechnet werden.

5. Verfahren nach einem der Ansprüche 1 bis 4, ferner umfassend:

Erhalten einer Prüfanforderung, wobei eines oder mehrere der ersten und der zweiten Prüfpakete der Prüfanforderung entsprechen; und
Übermitteln eines Rückrufs.

6. Verfahren nach einem der Ansprüche 1 bis 5, ferner umfassend die folgenden Schritte:

Senden einer QoS-Verstärkungsanforderung an einen Verstärkungsdienstknoten; und
Senden einer Verstärkungsaufhebungsanforderung an den Verstärkungsdienstknoten.

7. Verfahren nach einem der Ansprüche 2 bis 6, ferner umfassend:
Senden der Prüfergebnisse oder Ergebnisse einer Dienstqualitätsbestimmung, QOS-Bestimmung, an den Knoten.

8. Verfahren nach einem der Ansprüche 1 bis 7,

wobei die UE eine Endbenutzervorrichtung ist, die mit einem oder mehreren von einem Datenpfad eines Mobilfunk- oder eines Weitverkehrsnetzwerks, WAN, verbunden ist, und
wobei der Knoten ein Prüfkopfmodul umfasst.

9. Verfahren nach einem der Ansprüche 1 bis 8, wobei einer oder mehrere der Berechnungsschritte ein separates Bewerten einer oder mehrerer von einer Mobilfunk-Uplink-Verstärkung, einer Mobilfunk-Downlink-Verstärkung, einer WAN-Uplink-Verstärkung, einer WAN-Downlink-Verstärkung, einer Mobilfunk-Uplink-Überlastung, einer Mobilfunk-Downlink-Überlastung, einer WAN-Uplink-Überlastung oder einer WAN-Downlink-Überlastung umfassen.

10. Benutzereinrichtung, UE, (900), die zum Durchführen eines der Verfahren nach Anspruch 1 bis 9 konfiguriert ist.

11. Verfahren (750), das von einem Knoten durchgeführt wird und Folgendes umfasst:

Empfangen und Reflektieren (752) eines oder mehrerer erster Prüfpakete von bzw. zu einer Endbenutzervorrichtung, wobei die ersten Prüfpakete nicht für verbesserte Dienstqualität, QoS, verstärkt werden;
Empfangen und Reflektieren (754) eines oder mehrerer zweiter Prüfpakete von bzw. zu der Endbenutzervorrichtung, wobei die zweiten Prüfpakete für verbesserte Dienstqualität, QoS, verstärkt werden;
Empfangen (756) einer Nachricht von der Endbenutzervorrichtung, die eines oder mehrere von einem QoS-Prüfergebnis, einer QoS-Bestimmung, einer QoS-Anforderung oder einer Verstärkungsanforderung zumindest teilweise basierend auf den ersten und den zweiten Prüfpaketen angibt.

12. Verfahren nach Anspruch 11, ferner umfassend:

Durchführen einer Tag-Optimierung an einem oder mehreren der ersten und der zweiten Prüfpakete; und/oder
Archivieren mindestens eines Teils der empfangenen Nachricht.

13. Verfahren nach einem der Ansprüche 11 oder 12, wobei:

der Knoten ein Prüfkopfmodul umfasst, das in einer Cloud-Umgebung ausgeführt wird und einen Two-Way Active Measurement-Server, TWAMP-Server, und Sitzungsreflektor umfasst; und/oder
die Takte des Knotens und der Endbenutzervorrichtung nicht synchronisiert sind.

14. Knoten (1000), der zum Durchführen eines der Verfahren nach einem der Ansprüche 11 bis 13 konfiguriert ist.

15. Computerprogrammprodukt, umfassend ein nichtflüchtiges computerlesbares Medium, das Anweisungen speichert, die bei Ausführung durch Verarbeitungsschaltungsanordnung

eines Knotens den Knoten zum Durchführen eines der Ansprüche 11 bis 13 veranlassen oder einer Benutzereinrichtung, UE, die UE zum Durchführen eines der Ansprüche 1 bis 9 veranlassen.

**Revendications**

1. Procédé (700) réalisé par un équipement utilisateur, UE, pour une mesure de réseau actif, le procédé comprenant :

l'envoi (702) d'un ou plusieurs premiers paquets de test à un noeud, dans lequel les premiers paquets de test ne sont pas amplifiés pour une qualité de service, QoS, améliorée ;
la réception (704) d'un ou plusieurs premiers paquets réfléchis à partir du noeud ;
le calcul (706) de résultats préliminaires sur la base au moins en partie des premiers paquets réfléchis reçus ;
l'envoi (708) d'un ou plusieurs deuxièmes paquets de test au noeud, dans lequel les deuxièmes paquets de test sont amplifiés pour une QoS améliorée ;
la réception (710) d'un ou plusieurs deuxièmes paquets réfléchis depuis le noeud ; et
le calcul (712) de résultats de test sur la base au moins en partie des deuxièmes paquets réfléchis reçus et des résultats préliminaires.

2. Procédé selon la revendication 1, comprenant en outre :

la réalisation (714) d'une détermination de qualité de service, QoS, d'une demande de QoS, ou d'une opération de rapport de QoS sur la base au moins partie des résultats de test ; et/ou
la fourniture d'une indication relative à une utilisation d'une amplification de QoS pour des transmissions suivantes depuis l'UE.

3. Procédé selon la revendication 2, dans lequel l'indication est une indication à un utilisateur qu'une amplification de QoS améliorerait la qualité d'expérience de l'utilisateur.

4. Procédé selon l'une quelconque des revendications 1 à 3, dans lequel :

les résultats préliminaires comprennent une ou plusieurs valeurs de temps ou de retard, et les une ou plusieurs valeurs de temps ou de retard sont calculées sur la base au moins en partie d'horodatages des premiers paquets réfléchis reçus ; et/ou
les résultats de test comprennent une ou plusieurs valeurs de temps, de retard, d'effet d'une amplification de QoS, ou de congestion, et les une ou plusieurs valeurs de temps, de retard, d'effet d'une amplification de QoS, ou de congestion sont calculées sur la base au moins en partie d'horodatages des deuxièmes paquets réfléchis reçus.

**5.** Procédé selon l'une quelconque des revendications 1 à 4, comprenant en outre :

l'obtention d'une demande de test, dans lequel un ou plusieurs des premier et deuxième paquets de test correspondent à la demande de test ; et
la soumission d'un rappel.

**6.** Procédé selon l'une quelconque des revendications 1 à 5, comprenant en outre les étapes suivantes :

l'envoi d'une demande d'amplification de QoS à un noeud de service d'amplification ; et
l'envoi d'une demande de désamplification au noeud de service d'amplification.

**7.** Procédé selon l'une quelconque des revendications 2 à 6, comprenant en outre :
l'envoi des résultats de test ou des résultats d'une détermination de qualité de service, QoS, au noeud.

**8.** Procédé selon l'une quelconque des revendications 1 à 7,

dans lequel l'UE est un dispositif utilisateur final connecté à un ou plusieurs d'un trajet de données cellulaires et d'un trajet de données de réseau étendu, WAN, et
dans lequel le noeud comprend un module de tête de test.

**9.** Procédé selon l'une quelconque des revendications 1 à 8, dans lequel une ou plusieurs des étapes de calcul comprennent l'évaluation séparément d'une ou plusieurs d'une amplification de liaison montante cellulaire, d'une amplification de liaison descendante cellulaire, d'une amplification de liaison montante WAN, d'une amplification de liaison descendante WAN, d'une congestion de liaison montante cellulaire, d'une congestion de liaison descendante cellulaire, d'une congestion de liaison montante WAN et d'une congestion de liaison descendante WAN.

**10.** Equipement utilisateur, UE, (900) configuré pour réaliser l'un quelconque des procédés selon les revendications 1 à 9.

**11.** Procédé (750) réalisé par un noeud, comprenant :

la réception et la réflexion (752) d'un ou plusieurs premiers paquets de test depuis un dispositif utilisateur final, dans lequel les premiers paquets de test ne sont pas amplifiés pour une qualité de service, QoS, améliorée ;
la réception et la réflexion (754) d'un ou plusieurs deuxièmes paquets de test depuis le dispositif utilisateur final, dans lequel les deuxièmes paquets de test sont amplifiés pour une QoS améliorée ; et
la réception (756) d'un message depuis le dispositif utilisateur final indiquant un ou plusieurs d'un résultat de test de QoS, d'une détermination de QoS, d'une demande de QoS et d'une demande d'amplification sur la base au moins en partie des premier et deuxième paquets de test.

**12.** Procédé selon la revendication 11, comprenant en outre :

la réalisation d'une optimisation de balise sur un ou plusieurs des premier et deuxième paquets de test ; et/ou
l'archivage d'au moins une partie du message reçu.

**13.** Procédé selon la revendication 11 ou 12, dans lequel :

le noeud comprend un module de tête de test s'exécutant dans un environnement cloud et comprend un serveur de mesure active bidirectionnelle, TWAMP, et un réflecteur de session ; et/ou
les horloges du noeud et du dispositif utilisateur final ne sont pas synchronisées.

**14.** Noeud (1000) configuré pour réaliser l'un quelconque des procédés selon les revendications 11 à 13.

**15.** Produit programme informatique comprenant un support non transitoire lisible par ordinateur stockant des instructions qui, lorsqu'elles sont réalisées par la circuiterie de traitement :

d'un noeud, amènent le noeud à réaliser l'une quelconque des revendications 11 à 13 ; ou
d'un équipement utilisateur, UE, amènent l'UE à réaliser l'une quelconque des revendications 1 à 9.

102                                                                    104

Control-Client      ◄ –TWAMP-Control– ►      Server

- - - - - - - - - - -                          - - - - - - - - - - -

Session-Sender      ◄ —TWAMP-Test— ►      Server-Reflector

106                                                                    108

# FIG. 1

FIG. 2

EP 4 364 377 B1

302

324
326
328
330
332

T1
T4

A1+X1

A2+X2

310

308a

308

304

γ1

γ2

312

308b

T2
T3

306

**FIG. 3**

FIG. 4

FIG. 5

**600**

IOS/Android App, Portal 602

SDK 604

Test Head 606

Boost Service 608

NEF 610

RequestTest (# of Packets, Packet size, Boost Type, DNN)

Send Test Packets (Un-boosted, # of packets, Packet Size)

Optimized Tag and Reflect Test Packets

Boost Request (Boost Type, Short Boost, DNN)

Special Gatekeeper Check (Short boost)

T8 Boost

Calculate Preliminary Results (Packets Collected)

OK

Send Test Packets (Boosted, # of packets, Packet Size)

Optimized Tag and Reflect Test Packets

Un-Boost Request

No Gatekeeper Check needed here

T8 Un-Boost

Calculate Test Results (Packets Collected, Preliminary Result)

OK

POST (Test Result, Lot, Long, cellID)

Archive (Timestamp, Lot, Long, Test Result, cellID)

Callback (Test Result)

**FIG. 6**

700

s702

send a first set of test packets to a network node, wherein the first set of test packets are un-boosted

s704

receive first reflected packets from the network node

s706

calculate preliminary results based at least in part on the received first reflected packets

s708

send a second set of test packets to the network node, wherein the second set of test packets are sent boosted

s710

receive second reflected packets from the network node

s712

calculate test results based at least in part on the received second reflected packets and the preliminary results

s714

perform a QoS determination (or QoS request) based at least in part on the test results

**FIG. 7A**

750

s752

receive and reflect a first set of test packets from an end-user device, wherein the first set of test packets are un-boosted

s754

receive and reflect a second set of test packets from an end-user device, wherein the second set of test packets are boosted

s756

receive a message from the end-user device indicating QoS test results based on the first and second test packets

## FIG. 7B

**FIG. 8**

UE 900

PROCESSING CIRCUITRY 902

INPUT/OUTPUT INTERFACE 906

POWER SOURCE 908

BUS 904

MEMORY 910

APPLICATION PROGRAMS 914

DATA 916

COMMUNICATION INTERFACE 912

TRANSMITTER 918

RECEIVER 920

ANTENNA 922

**FIG. 9**

NETWORK NODE 1000

ANTENNA 1010

COMMUNICATION INTERFACE 1006

RADIO FRONT-END CIRCUITRY 1018

FILTER 1020

AMPLIFIER 1022

PORT / TERMINAL 1016

POWER SOURCE 1008

PROCESSING CIRCUITRY 1002

RF TRANSCEIVER CIRCUITRY 1012

BASEBAND CIRCUITRY 1014

MEMORY 1004

**FIG. 10**

HOST 1100

| PROCESSING CIRCUITRY 1102 | INPUT/ OUTPUT INTERFACE 1106 | NETWORK INTERFACE 1108 | POWER SOURCE 1110 |

BUS 1104

MEMORY 1112

HOST APPLICATION PROGRAMS 1114

DATA 1116

## FIG. 11

VIRTUALIZATION ENVIRONMENT 1200

MANAGEMENT AND ORCHESTRATION 1210

APPLICATION / VIRTUAL APPLIANCE / VIRTUAL NODE OR SERVER / INSTANCE 1202

VM 1208A

VM 1208B

VIRTUALIZATION LAYER 1206

HARDWARE 1204

CONTROL SYSTEM 1212

## FIG. 12

HOST
1302

HOST PROVIDES USER DATA
1308

HOST INITIATES
TRANSMISSION CARRYING
THE USER DATA TO UE
1310

HOST RECEIVES THE
USER DATA
TRANSMITTED FROM
UE
1322

CONNECTION
1360

NETWORK NODE
1304

NETWORK NODE
TRANSMITS THE USER
DATA TO UE
1312

NETWORK NODE
TRANSMITS THE USER
DATA TO HOST
1320

OTT
CONNECTION
1350

WIRELESS
CONNECTION
1370

UE
1306

UE RECEIVES THE
USER DATA
1314

UE INITIATES
TRANSMISSION OF THE
USER DATA TO HOST
1318

UE PROVIDES USER
DATA
1316

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160105341 A

- GB 2580595 A